Europäisches Patentamt

(19) European Patent Office

Office européen des brevets

(11) Publication number: 0 136 394
A2

# (12) EUROPEAN PATENT APPLICATION

(21) Application number: 84101544.9

(22) Date of filing: 16.02.84

(51) Int. Cl.⁴: C 02 F 3/20
B 01 F 3/04, A 01 K 63/04

(30) Priority: 06.10.83 JP 187535/83

(43) Date of publication of application:
10.04.85 Bulletin 85/15

(84) Designated Contracting States:
AT BE CH DE FR GB IT LI LU NL SE

(71) Applicant: YOKOSUKA BOAT KABUSHIKI KAISHA
1-17, Sahara 2-chome
Yokosuka 239(JP)

(72) Inventor: Hamaguchi, Yukio
4, Sano-machi 6-chome
Yokosuka 238(JP)

(72) Inventor: Mochizai, Tadashi
39-3, Ohyabe 4-chome
Yokosuka 238(JP)

(74) Representative: Strohschänk, Heinz, Dipl.-Ing.
Musäusstrasse 5
D-8000 München 60(DE)

(54) Method and apparatus for solution of gas in liquid.

(57) Based on the principle of an atomizer, this invention effects solution of a gas in a liquid by exerting a continuous current of a liquid rapidly in a shearing direction upon the gas at the leading ends of nozzles or fine oriffices. This method is worked by an apparatus which comprises a cylinder provided with a bottom and having concentrically fixed to the upper part thereof a pipe for introducing a gas therein, a multiplicity of fine holes pieced through the peripheral wall of the cylinder, and means for rotating the cylinder and the pipe at a high speed about the axis of the cylinder as the center of rotation.

FIG. 1

EP 0 136 394 A2

## Method and apparatus for solution of gas in liquid

This invention relates to a method and apparatus for the solution of a gas such as air or oxigen in a liquid such as water, and more particularly to apparatus aimed at activating foul water lacking oxygen or maintaining and improving the quality of water for use in marine nurseries.

Heretofore, as means for incorporating air or oxygen into water, the method which comprises keeping the end of an outside pipe of an air compressor under water and operating the air compressor to feed air bubbles into the water has been widely known to the art.

In accordance with this forced aeration method, however, since the bubbles rise up the water owing to the buoyancy and immediately disperse into the ambient air, the solubility of the gas in water is low and the treatment cannot be expected to be quite effective. There are even times when the bubbles so formed in large volume agitate the water so heavily as to bring about adverse effects upon the function being fulfilled by the water under treatment.

An object of this invention is to provide an apparatus which enables a gas to be solved easily and inexpensively in a liquid with the liquid retained in the minimally agitated state and, therefore, permits activation of liquids lacking oxygen and maintenance and improvement of the quality of water for use in marine nurseries.

This invention, in construction, resides in effecting required solution of a gas in a liquid by rapidly exerting a continuous current of a liquid in a shearing direction upon the gas at the leading end of a nozzle or fine orifice by the utilixation of the principle of an atomizer, namely the phenomenon that a liquid at the leading end of a nozzle, on exposure to a sudden current of gas released in a shearing direction, is divided into minute particles. Specifically, the apparatus of this invention comprises a cylinder provided with a bottom, a pipe for introduction of a gas concentrically fixed at the upper part of the cylinder, a multiplicity of fine holes pierced through the lateral wall of the cylinder, and means for rotating the cylinder provided with the pipe about the axis of the cylinder and the pipe as the center of rotation.

When the upper end of the cylinder provided with the pipe is left exposed to a gas and the cylinder proper is kept submerged under a liquid, the liquid passes through the fine holes into the interior of the cylinder and rises up the pipe to the level of the liquid outside the cylinder and the pipe while the apparatus is at rest. As the aforementioned cylinder provided with the pipe is rotated at a gradually increased speed, it eventually generates centrifugal force and causes the liquid held inside the cylinder to be thrown out through the fine holes and allows the gas to fill up the entire interior of the cylinder. As the rotation of the cylinder is further continued at a gradually increased speed, the air inside the cylinder is released through the fine holes into the liquid surrounding the cylinder. At this time, the outer peripheral surface of the cylinder in which the fine holes open is relatively exposed to the current of the liquid in motion at an equal speed in the shearing direction directly opposite the direction of rotation of the cylinder. Thus, the gas departing from the aforementioned fine holes is divided into finer particles than the normal bubbles of air. These particles of the gas have virtually no buoyancy and are allowed to solve into the liquid. The operation just described represents a concrete working of this invention attained by causing the cylinder to be rotated at a high speed while keeping the liquid at rest.

In case where the liquid is flowing at a speed contrary to the setup described above, if the fine holes filled with the gas are formed as arrayed in a wall resembling a quay, for example, then the gas is dissolved into the liquid because the openings of the fine holes are exposed to the current of the liquid in motion in the shearing direction.

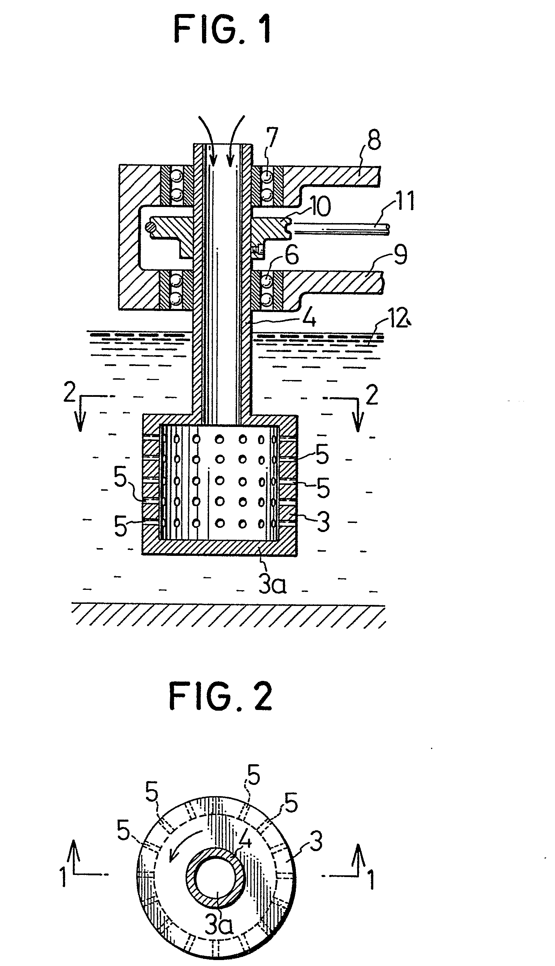

The drawings illustrate one embodiment of this invention. Fig. 1 is an overall longitudinal cross embracing a cross section taken along the line I-I in the diagram of Fig. 2. Fig. 2 is a sectional plan view taken along the line 2-2 of the diagram of Fig. 1.

To the upper part of a cylinder 3 containing a circular bottom 3a of a diameter of 5 cm, a pipe 4 for introduction of a gas is concentrically fixed. A multiplicity of fine holes 5 are pierced through the peripheral wall of the cylinder 3. The cylinder 3 is made of a corrosionproof titanium alloy. The fine holes are pierced through the peripheral wall of this cylinder by means of a laser beam.

In another embodiment of this invention, the cylinder 3 may be formed of a ceramic material. Then, the peripheral wall of the cylinder contains a multiplicity of fine pores from the beginning.

The pipe 4 is supported at two vertical points through the medium of bearings 6, 7 by arms 8, 9 respectively. A pulley 10 is fastened to the pipe 4 halfway between the two arms 8, 9. This pulley 10 is adapted to be rotated by a belt 11 which is driven by a drive source not shown in the diagram.

Now, the cylinder 3 of the apparatus completed as described above is submerged under water 12 and the upper end of the pipe 4 is exposed to the ambient air. First, owing to the pressure of water, the water finds its way through the fine holes 5 into the interior of the cylinder 3. As the pipe 4 is rotated by the pulley 10 which is sympathetically driven by the belt 11, centrifugal force is exerted to bear upon the cylinder 3, with the result that the water inside the cylinder is forced out through the fine holes 5 and the air is brought in to fill the entire interior of the cylinder. As the rotation of the cylinder 3 is continued with a gradually increased speed (at 8,000 to 12,000 rpm, for example), the air inside the cylinder is thrown out through the fine holes 5 into the water. Since the external peripheral surface of the cylinder 3 in which the fine holes open is rubbed against the surrounding water at a speed of about 100 km per hour, the air departing from the fine holes 5 is divided into finer particles than normal bubbles. These fine particles of air have virtually no buoyancy and are allowed to dissolve into the water.

The amount of the air thus dissolved into the water can be estimated by installing a flow meter at the opening of the pipe 4 and measuring the volume of air drawn into the cylinder 3.

As described in detail above, this invention causes the pipe 4 and the cylinder 3 joined concentrically to each other to be rotated at a high speed in the liquid with the common axis thereof as the center of rotation. Since the pipe and the cylinder therefore receive virtually negligible resistance, they keep the agitation and turbulence of the liquid down to the minimum. Moreover, the apparatus enables the gas to be dissolved in the liquid very simply and notably inexpensively. This invention, therefore, proves highly effective in activating water lacking oxygen and maintaining and improving the quality of water for use at marine nurseries.

Claims:

1. A method for the solution of a gas in a liquid, which method comprises exerting a current of said liquid rapidly in a shearing direction upon said gas at the leading ends of fine holes.

2. An apparatus for the solution of a gas in a liquid, comprising:

a cylinder provided with a bottom and having concentrically fixed to the upper part thereof a pipe for introducing a gas therein,

a multiplicity of fine holes pierced through the peripheral wall of said cylinder, and

means for rotating said cylinder provided with said pipe at a high speed about the axis of said cylinder as the center of rotation thereof.

# FIG. 1

# FIG. 2